Europäisches Patentamt

European Patent Office

Office européen des brevets

(19)

(11) Veröffentlichungsnummer: **0 175 916**
**B1**

(12) **EUROPÄISCHE PATENTSCHRIFT**

(45) Veröffentlichungstag der Patentschrift:
26.07.89

(51) Int. Cl.⁴: **A 01 B 71/06**, G 01 L 3/10

(21) Anmeldenummer: 85110309.3

(22) Anmeldetag: 17.08.85

(54) **Einrichtung zum Regeln und Steuern des Antriebs eines an einem landwirtschaftlichen Arbeitsfahrzeug angehängten Arbeitsgeräts.**

(30) Priorität: 22.09.84 DE 3434825

(43) Veröffentlichungstag der Anmeldung:
02.04.86 Patentblatt 86/14

(45) Bekanntmachung des Hinweises auf die Patenterteilung:
26.07.89 Patentblatt 89/30

(84) Benannte Vertragsstaaten:
DE FR GB IT

(56) Entgegenhaltungen:
DE-A- 3 008 584
DE-A- 3 307 105
GB-A- 2 065 897
US-A- 3 319 464
US-A- 4 416 161

(73) Patentinhaber: ROBERT BOSCH GMBH, Postfach 50,
D-7000 Stuttgart 1 (DE)

(72) Erfinder: Hesse, Horst, Dr. Dipl.-Ing., Auberlenweg 13b,
D-7000 Stuttgart 1 (DE)

## Beschreibung

Die Erfindung ist auf eine Einrichtung nach dem Anspruch 1 gerichtet. Es ist schon eine Einrichtung bekannt, bei der mit Hilfe einer Reibungskupplung eine Verbindung von einer vom Motor des Schleppers angetriebenen Hauptwelle zu einer Antriebswelle für eine Zapfwelle des Schleppers hergestellt wird. Der auf die Kupplungsscheiben der Reibungskupplung einwirkende Maximaldruck ist dabei auf das maximal zu übertragende Drehmoment eingestellt. Dazu sind an der Hauptwelle und an der Antriebswelle Signalgeber angeordnet, die in Wirkverbindung mit einer den Anpressdruck der Reibungskupplung bestimmenden Stelleinrichtung stehen. Die Einrichtung baut dadurch aufwendig und kompliziert. Durch den Schlupf der Reibungskupplung kann der Antrieb und dadurch das Arbeitsgerät wieder abgeschaltet werden.

Ferner ist ein Wirbelstromsensor zur Messung des Drehmoments bekannt. Dieser ist aber bisher nur bei Kraftfahrzeugen zur Bestimmung des Fahrverhaltens benutzt worden.

Vorteile der Erfindung

Die erfindungsgemässe Einrichtung hat demgegenüber den Vorteil, dass das Drehmoment ohne eine zusätzliche Reibungskupplung übertragen und begrenzt werden kann. Es ist möglich, das Drehmoment und somit die Leistungsabgabe des Antriebs ohne direkte Berührung der Welle einfach und mit geringem Bauaufwand anzuzeigen. Die Einrichtung ist unempfindlich gegen Temperatur und Verschmutzung und dadurch für den rauhen Einsatz bei landwirtschaftlichen Arbeitsfahrzeugen geeignet. Die Messfehler sind gering. Es sind aber auch kleine Drehmomente gut erfassbar.

Durch die in den Unteransprüchen aufgeführten Massnahmen sind vorteilhafte Weiterbildungen und Verbesserungen der im Hauptanspruch angegebenen Einrichtungen möglich.

Zeichnung

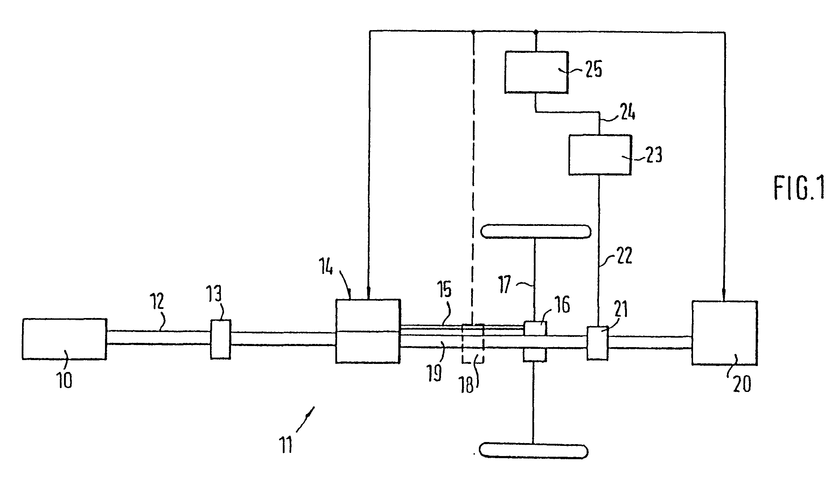

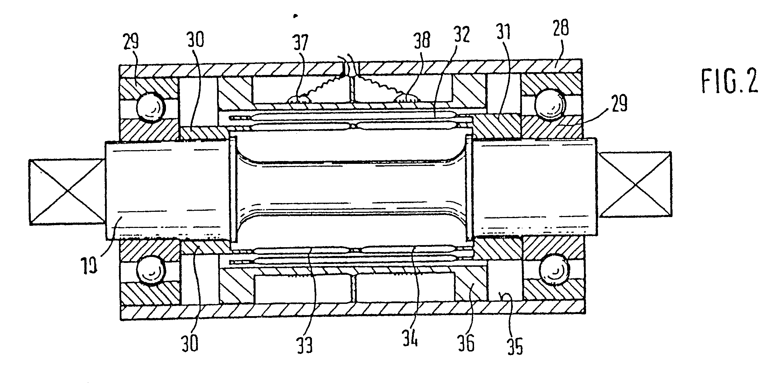

Ein Ausführungsbeispiel der Erfindung ist in der Zeichnung dargestellt und in der nachfolgenden Beschreibung näher erläutert. Es zeigen Figur 1 eine Einrichtung zum Regeln und Steuern des Antriebs eines an einem landwirtschaftlichen Arbeitsfahrzeug angehängten Arbeitsgeräts in vereinfachter Darstellung und Figur 2 einen Längsschnitt durch einen Drehmomentsensor.

Beschreibung des Ausführungsbeispiels

Vom Motor 10 eines Schleppers 11 wird eine Welle 12, eine Kupplung 13, ein Getriebe 14, einen Wellenabschnitt 15 und über das Differential 16 die Hinterachse 17 des Schleppers 11 angetrieben. Ferner führt vom Getriebe 14 über eine Zapfwellenkupplung 18 eine Zapfwelle 19 zu einem landwirtschaftlichen Zusatzgerät 20, z.B einem Mähdrescher oder einem Ballenpresser. An der Zapfwelle 19 ist ein Drehmomentsensor 21 angeordnet, der über eine elektrische Leitung 22 mit einem Verstärker 23 verbunden ist. Von diesem führt eine elektrische Leitung 24 zu einer Steuerelektronik 25, die in Wirkverbindung mit dem Getriebe 14 und mit dem Zusatzgerät 20 oder mit der Zapfwellenkupplung 18 steht. Die Wirkverbindung der Steuerelektronik 25 mit der Zapfwellenkupplung 18 ist alleine oder zusätzlich zur Wirkverbindung mit dem Getriebe 14 und dem Zusatzgerät 20 möglich, abhängig davon, ob das Zusatzgerät 20 geregelt oder gesteuert werden soll. Die Steuerelektronik 25 kann somit sowohl eine elektronische Regeleinrichtung als auch eine elektronische Steuereinrichtung sein.

Der Drehmomentsensor 21 arbeitet nach dem sogenannten Wirbelstrommessverfahren und ist in Figur 2 näher dargestellt. Er hat ein hülsenförmiges Gehäuse 28, das mit Hilfe von Kugellagern 29 auf der Zapfwelle 19 gelagert ist. Die Zapfwelle 19 ist im Bereich des Gehäuses 28 als Torsionswelle ausgebildet. Innerhalb des Gehäuses 28 sind auf der Zapfwelle 19, sich jeweils an die Kugellager 28 anschliessend, eine innere und eine äussere Schlitzhülse 30 bzw. 31 angeordnet. Die äussere Schlitzhülse 31 weist in Längsrichtung eingefräste Schlitze 32 auf. Bei der inneren Schlitzhülse 30 sind zwei Schlitzreihen 33, 34 ausgebildet, die jeweils um eine Schlitzbreite zueinander versetzt sind. Sie verlaufen ebenfalls in Längsrichtung der inneren Schlitzhülse 30, wobei ihre Länge etwa der halben Länge der Schlitze 32 der äusseren Schlitzhülse 31 entsprechen. Konzentrisch zu den beiden Schlitzhülsen 30, 31 befindet sich an der Innenwandung 35 des Gehäuses 28 ein Spulenkörper 36, auf dem zwei Spulen 37, 38 angeordnet sind.

Wird vom Getriebe 14 über die Zapfwelle 19 ein Antriebsdrehmoment auf das Zusatzgerät 20 übertragen, so wird die Zapfweille 19 im Bereich des Gehäuses 28 des Drehmomentsensors 21 leicht tordiert. Dadurch wird eine Schlitzreihe 33 der inneren Schlitzhülse 30 durch die äussere Schlitzhülse 31 überdeckt, während die andere Schlitzreihe 34 der inneren Schlitzhülse 30 sich öffnet, und umgekehrt. Dadurch wird in den beiden Spulen 37, 38 ein gegensinniges Messsignal erzeugt, das in einer nicht dargestellten, herkömmlich bekannten Halbrückenschaltung zu einem doppelten Ausgangssignal führt. Es wäre auch nur eine einzige Spule möglich, aber durch zwei Spulen ist eine besonders genaue und störunempfindliche Messung möglich. Alle gegensinnigen Einflüsse durch Temperatur und Störfelder werden dadurch kompensiert. Dieses Ausgangssignal wird im Verstärker 23 verstärkt und der Steuerelektronik 25 zugeleitet und dort mit einem vorgegebenen Sollwert verglichen. Als Sollwert kann z.B. das maximal zu übertragende Drehmoment in der Steuerelektronik 25 eingestellt sein. Übersteigt nun das von der Zapfwelle 19 auf das Zusatzgerät 20 übertragene Drehmoment den vorgegebenen Sollwert, so schaltet die Steuerelektronik 25 die Übersetzung für die Zapfwelle 19 im Getriebe 14 so weit zurück, bis der vorgegebene Sollwert wieder unterschritten ist.

Dadurch wird eine Überlastung des Zusatzgeräts 20 verhindert.

Es ist aber auch möglich, dass die Steuerelektronik 25 die Zapfwellenkupplung 18 abschaltet, um so eine Überlastung des Zusatzgeräts 20 zu verhindern.

Ferner ist es auch möglich, am Zusatzgerät 20 Arbeitsvorgänge, z.B. den Bindevorgang beim Ballenpressen, in Abhängigkeit von verschiedenen Drehmomentwerten auszuführen. Dazu sind an der Steuerelektronik 25 verschiedene Sollwerte einstellbar, an denen die einzelnen Arbeitsabschnitte einsetzen. Selbstverständlich ist es dabei auch möglich, den Drehmomentverlauf über eine Anzeigevorrichtung anzuzeigen.

## Patentansprüche

1. Einrichtung zum Regeln und Steuern des Antriebs eines an einem landwirtschaftlichen Arbeitsfahrzeug (11), insbesondere eines Schleppers, angehängten Arbeitsgeräts (20), mit einem nach der Wirbelstrommesstechnik arbeitenden Sensor (21) zur Messung des vom Getriebe (14) des Arbeitsfahrzeugs (11) auf das Arbeitsgerät (20) übertragenen Antriebsdrehmoments, der in eine zum Arbeitsgerät (20) führende Zapfwelle (19) eingebaut ist und dessen Signal einer den Antrieb des Arbeitsgeräts (20) steuernden oder regelnden Elektronik (25) zugeführt wird.

2. Einrichtung nach Anspruch 1, dadurch gekennzeichnet, dass der Sensor (21) ein hülsenförmiges Gehäuse (28) hat, das mit Hilfe von Lagern (29) auf der Zapfwelle (19) des Arbeitsfahrzeugs (11) angeordnet ist, dass der Sensor (21) zwei radial zueinander bewegliche Hülsen (30, 31) hat, von denen die erste Hülse (31) Längsschlitze (32) aufweist und die zweite Hülse (30) zwei Reihen von Längsschlitzen (33, 34) hat, die um eine Schlitzbreite zueinander versetzt sind, und dass im Bereich der Längsschlitze (32, 33, 34) der beiden Hülsen (30, 31) wenigstens eine Spule (37) mit einem Spulenkörper (36) angeordnet ist.

3. Einrichtung nach Anspruch 2, dadurch gekennzeichnet, dass die Längsschlitze (32, 33, 34) der beiden Hülsen (30, 31) gleich breit sind.

4. Einrichtung nach einem der Ansprüche 1 bis 3, dadurch gekennzeichnet, dass an der Steuerelektronik (25) verschiedene Sollwerte für unterschiedliche Arbeitsvorgänge des Arbeitsgeräts (20) einstellbar sind.

5. Einrichtung nach einem der Ansprüche 1 bis 4, dadurch gekennzeichnet, dass die Steuerelektronik (25) zum Schutz des Arbeitsgeräts (20) vor Überlastung in Wirkverbindung mit der Zapfwellenkupplung (18) steht.

6. Einrichtung nach einem der Ansprüche 1 bis 5, dadurch gekennzeichnet, dass die Steuerelektronik (25) die Zapfwellenkupplung (18) bei Überlastung des Arbeitsgeräts (20) steuert.

## Claims

1. Apparatus for regulating and steering the propulsion of an implement (20) mounted on an agricultural working vehicle (11), in particular a tractor, with a sensor (21), operating according to the eddy-current measuring technique, for measurement of the propulsion torque transmitted from the transmission (14) of the working vehicle (11) onto the implement (20), which sensor is fitted into a power take-off shaft (19) leading to the implement (20), and the signal of which is fed to an electronic unit (25) controlling or regulating the propulsion of the implement (20).

2. Apparatus according to Claim 1 and/or 2 [sic], characterized in that the sensor (21) has a sleeve-shaped housing (28), which is arranged with the aid of bearings (29) on the power take-off shaft (19) of the working vehicle (11), in that the sensor (21) has two sleeves (30, 31), which are movable radially with respect to each other and of which the first sleeve (31) has longitudinal slots (32) and the second sleeve (30 has two rows of longitudinal slots (33, 34), which are offset from each other by the width of a slot, and in that there is arranged in the region of the longitudinal slots (32, 33, 34) of the two sleeves (30, 31) at least one coil (37) with a coil former (36).

3. Apparatus according to Claim 3, characterized in that the longitudinal slots (32, 33, 34) of the two sleeves (30, 31) are equally wide.

4. Apparatus according to one of Claims 1 to 4, characterized in that various set values for different operations of the implement (20) can be set on the electronic control unit (25).

5. Apparatus according to one of Claims 1 to 5, characterized in that the electronic control unit (25) is in effective connection with the power take-off clutch (18) for protection of the implement (20) against overloading.

6. Apparatus according to one of Claims 1 to 6, characterized in that the electronic control unit (25) controls the power take-off shaft clutch (18) in the event of overloading of the implement (20).

## Revendications

1. Dispositif pour régler et piloter l'entraînement d'outils (20) montés sur un véhicule agricole (11), notamment un tracteur, avec un détecteur (21) foncionnant selon la technique de mesure par courants de Foucault pour mesurer le couple d'entraînement transmis à partir de la boîte de vitesses (14) du véhicule (11) aux outils (20), ce détecteur étant monté dans une prise de force (19) aboutissant aux outils (20), et son signal étant appliqué à une électronique (25) de réglage ou de commande de l'entraînement des outils (20).

2. Dispositif selon la revendication 1, caractérisé en ce que le détecteur (21) a un boîtier (28) en forme de douille qui est disposé à l'aide de paliers (29) sur la prise de force (19) du véhicule agricole (11), ce détecteur (21) comportant deux douilles (30, 31) mobiles en rotation l'une par rapport à l'autre, et dont la première (31) comporte des fentes longitudinales (32), tandis que la seconde (30) comporte deux rangées de fentes longitudinales (33, 34) qui sont décalées l'une par rapport à l'autre, d'une largeur de fente, et dans la zone des fentes longitudinales (32, 33, 34) des deux douilles (30, 31) est disposée, au moins une bobine (37) avec un corps de bobine (36).

3. Dispositif selon la revendication 2, caractérisé en ce que les fentes longitudinales (32, 33, 34) des deux douilles (30, 31) ont la même largeur

4. Dispositif selon une des revendications 1 à 3, caractérisé en ce que sur l'électronique de commande (25) on peut régler différentes valeurs de consigne pour différents processus de travail des outils (20)

5. Dispositif selon une des revendications 1 à 4, caractérisé en ce que l'électronique de commande (25) est en liaison opérationelle avec l'accouplement (18) de la prise de force pour protéger les outils (20) de la surcharge.

6. Dispositif selon une des revendications 1 à 5, caractérisé en ce que l'électronique de commande (25) commande l'accouplement (18) de la prise de force en cas de surcharge des outils (20).

FIG.1

FIG.2